(19) **Europäisches Patentamt**
**European Patent Office**
**Office européen des brevets**

(11) **EP 1 965 369 A2**

(12) **EUROPEAN PATENT APPLICATION**

(43) Date of publication:
**03.09.2008 Bulletin 2008/36**

(51) Int Cl.:
**G09G 3/20** (2006.01)

(21) Application number: **08003429.1**

(22) Date of filing: **26.02.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **02.03.2007 GB 0704080**

(71) Applicant: **Forth Dimension Displays Ltd.**
**Daigety Bay**
**Dunfermline, Fife**
**KY11 9NB Scotland (GB)**

(72) Inventor: **Holmes, Paul**
**Fife KY11 9FH (GB)**

(74) Representative: **Muttock, Neil John**
**QED Intellectual Property Limited**
**Harrow Exchange, 2 Gayton Road**
**Middlesex Harrow HA1 2XU (GB)**

(54) **Digital image displays**

(57) A method of adjusting a signal for a digital display where the input signal includes a number of discrete input intensity values which causes the display to give actual output signals having discrete output intensity values, and where the relationship between the input signal to actual output signal departs from a desired input signal to output signal relationship, comprises the steps of (i) considering at least a first input value and a first actual output value for the first input value, (ii) finding a second input value and a second actual output value for the second input value where the second actual output value is closer to the desired value for the first input value, (iii) recording a relationship between the first input value and the second input value, and finally (iv) substituting the second input value for the first input value in the signal. The method may be carried out for all input values.

**Figure 1**

Figure 5

**Description**

The present invention relates to digital image displays.

A conventional display is divided into individual pixels. To show an image composed of regions having different intensities, it is advantages that each pixel is capable of displaying a different intensity. In some liquid crystal devices for example, a pixel may be set at a state between states considered fully 'off' and 'on' giving a range of intensity on the display. This method has disadvantages however, and not all types of liquid crystal are suitable. Instead, for each frame of an image, a pixel may be held in an 'on' state for part of the time and an 'off' state for part of the time; to the human eye this will appear as a shade of grey. The ratio of 'off' time to 'on' time determines the shade of grey. This method is also used in colour systems to generate different intensities of the constituent colours making up the image, and the variation of intensity of each colour is still referred to as a greyscale.

Typically, each pixel is assigned an intensity on a graded scale, for example a scale of 0-255 which can be represented by eight bits. This is converted into eight bit planes, the longest bit plane lasting 128 times longer than the shortest bit plane.

When a liquid crystal pixel is switched from an 'on' state to an 'off' state, the transition is not a crisp square wave, but rather the pixel ramps between states, the waveform depending on a number of factors. Where the liquid crystal display is illuminated by LEDs, these LEDs may be switched off until the pixels have achieved a stable state. However, where a high intensity discharge (HID) lamp and colour wheel are used to illuminate the liquid crystal device, this is not possible. The illumination of the liquid crystal whilst it is being switched between bitplanes means that the ratio of light to dark transmitted/reflected by the pixel varies from the expected value, so that some grey intensity values increased or decreased, so that the display output does not match the input and the greyscale is distorted. This artefact is known as static false contouring.

The object of the present invention is to reduce the distortion caused by non-ideal pixel switching.

According to the present invention there is provided a method of adjusting a signal for a digital display where the input signal includes a number of discrete input intensity values which causes the display to give actual output signals having discrete output intensity values, where the relationship between the input signal to actual output signal departs from a desired input signal to output signal relationship, the method comprising the steps of

i) considering at least a first input value and a first actual output value for the first input value,

ii) finding a second input value and a second actual output value for the second input value where the second actual output value is closer to the desired value for the first input value,

iii) recording a relationship between the first input value and the second input value, and

iv) substituting the second input value for the first input value in the signal.

A display system embodying the invention will now be described, by way of example, with reference to the drawings, of which;

Figure 1 is a graphical representation of the relationship between the input signal and the output signal of a prior art system;

Figure 2a shows a detail of the graphical representation of the relationship between the input signal and the output signal of a prior art system;

Figure 2b shows a graphical representation of the same region as shown in figure 2a, and the finding of points with the nearest γ-values;

Figure 2c shows a graphical representation of the same region as shown in figure 2b, where some of the original points are replaced with points having nearer y-values;

Figure 2d shows a portion of a look-up table implementing the operation depicted in Figures 2b and 2c;

Figure 3a shows a graphical representation of the region shown in Figure 2c, together with dithered intermediates;

Figure 3b shows a graphical representation of the same region as shown in figure 3a, and the finding of points of the real or dithered levels with the nearest y-values;

Figure 3c shows a graphical representation of the same region as shown in figure 3b, where some of the original points are replaced with points having nearer y-values;

Figure 4 shows a diagrammatic representation of the processing system carrying out the point substitution operations of Figure 2.

Figure 5 shows a diagrammatic representation of the processing system carrying out the point substitution and pre-dither substitution operations of Figures 2 and 3.

The following description is written in terms of system using eight bit to describe each colour intensity level, i.e. from 0 to 255 for each colour.

The ideal transfer curve of a display is a straight line, meaning that the light throughput increases linearly with the digital intensity level. Pre-processing can alter the transfer curve by applying, for example, gamma adjustment, but in the absence of this, the ideal response is linear.

When the display is illuminated during liquid crystal switching, as well as when stable data is present, the effect of the irregular switching is that the effective weighting of each low-order bitplane varies depending upon the state of the preceding bitplane in the sequence. This effect is referred to as *weighting crosstalk.*

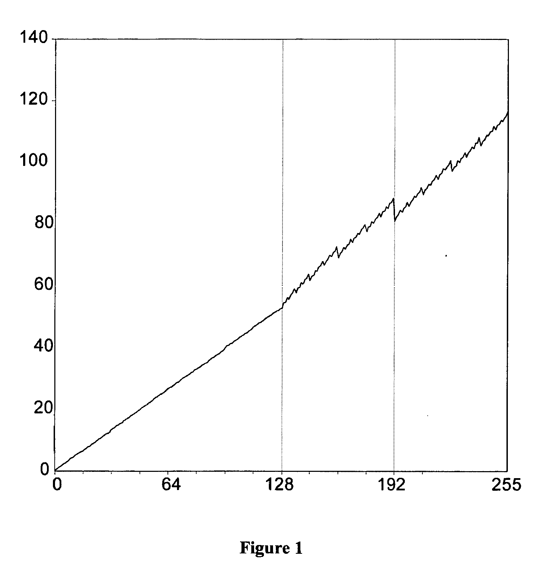

The bitplanes do not have to be displayed in any particular order; it may be more convenient, for example, to intersperse the lower significance bit planes in between or in the middle of more significant bitplanes. The exact result varies depending upon the ordering of bitplanes within the sequence, but one example of the distorted transfer curve is shown in Figure 1, where the x axis is the digital input level and the y axis is the measured light throughput. In this example, the most significant bit (MSB) is split into many sections, and low order bits are sandwiched between those sections. Since all of the low order bits are adjacent to the MSB, it is the MSB which causes all the low order bit weightings to be augmented, and this explains the clear division between the upper and lower halves of the curve in Figure 1.

With a different sequence ordering, the crosstalk might no longer depend entirely upon the MSB, but might depend to some measure upon, for example, the second most significant bit (MSB-1).

The shape of the transfer curve can be changed by adjusting the weightings of the bitplanes in the sequence. The problem is that the number of degrees of freedom is less than the number of points in the curve. When the weightings are adjusted to produce a smooth response in one part of the curve (in this example, the lower half), the response in a second part (in this example, the upper half) is far from smooth, and that weightings cannot be adjusted to improve the second part without worsening the first. Such reordering, therefore, does not eliminate the crosstalk - it just moves it around.

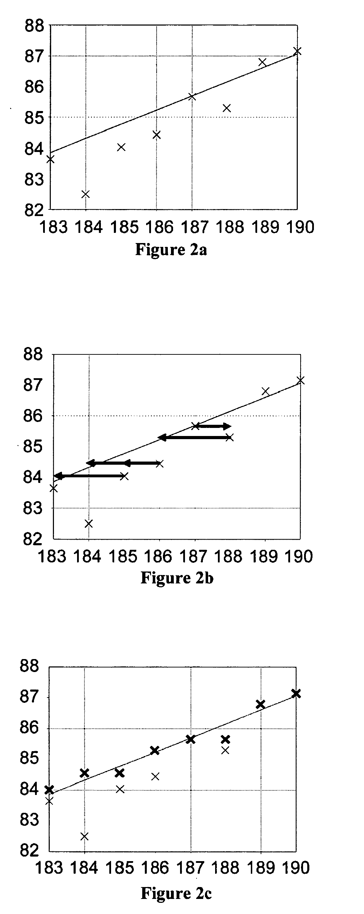

Figure 2(a) shows a short section of the measured transfer curve. It will be seen that although some points (e.g. 187) are very close to the ideal transfer curve (shown as a rising line), others (e.g. 184) are a long way from it. Due to the shortage of degrees of freedom previously mentioned, the y-value of point 184 cannot be adjusted without affecting other points. There are other points in the real curve, however, whose γ-values fall much closer to the ideal value for point 184 - point 186 is the best example.

In Figure 2(b), a substitution is shown in which, for each x-value, the point with the closest available y-value to the ideal is chosen as indicated by the arrows. A comparison of Figure 2(a) and (c) shows that the substituted transfer curve, while still containing errors, is considerably smoother than the original. In Figure 2(c), the bold crosses show the final position of the points after substitution, whereas the non-bold crosses show the original positions before substitution.

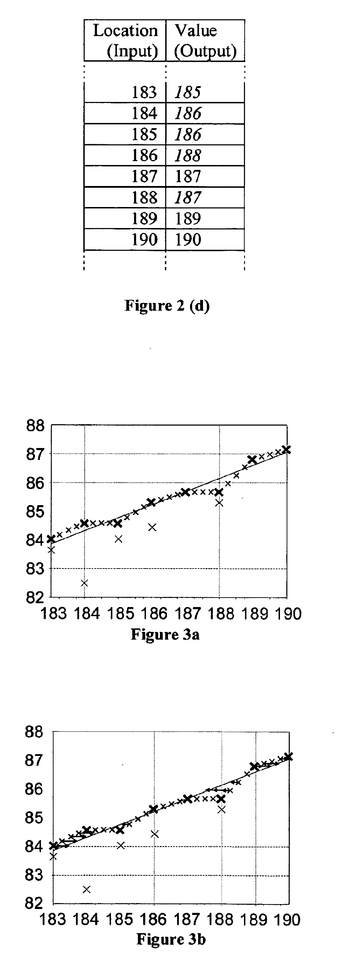

This substitution is effected by a look-up table (LUT) having 256 entries, an extract of which is shown in Figure 2(d). In Figure 2(d), the substituted points are denoted in italics.

Although this point substitution makes a marked improvement to the transfer curve, it is possible for the output to follow the input even more closely, by using a dither function to make further fine adjustments.

Dither is a technique used to make an image with a discrete number of colours appear more natural, and there are many types of dither. Any type of dither may be utilised for the following pre-dither substitution technique, though the dither technique described here is a four bit dither.

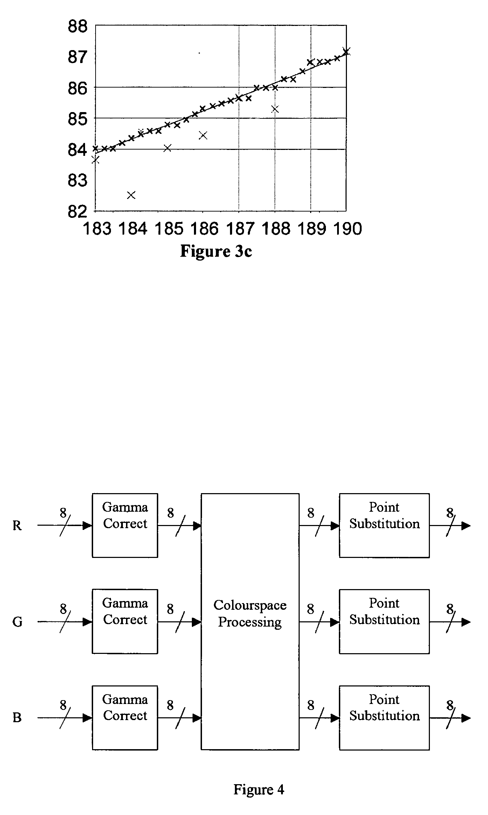

Without pre-dither substitution, dither would produce a transfer curve as shown in Figure 3(a) (For simplicity, the example uses only two bits of dither. In the real system, four bits of dither may be used.) The pre-dither substitution method is very similar to the point substitution method previously described, but it works on dithered intermediate levels as well as points on the native transfer curve. In Figure 3(b), x-values are again substituted to those with the nearest available y-values. The resulting curve, shown in Figure 3(c), has smaller errors than that produced by point substitution alone. Like the previously described point substitution, it is implemented with a LUT (not shown), but in this case the LUT has more than 8 bits in and out because it operates on high-precision values before they are dithered down.

In a colour display using red, green and blue channels, the first stage in implementing the process is to capture a transfer curve for each of red, green and blue. One way to do this is to direct a remote controlled radiometer pointed at approximately the centre of the final display screen. Accurate alignment is not required, because only relative brightness values are of interest, though the radiometer must, however, be mounted stably so that it does not move during the capture process.

Operations such as gamma correction, dither and other colourspace processing are turned off, so that the native transfer curve of the display/sequence combination is revealed. The display screen is then caused to display a gradual fade from zero to the maximum level (here 255), in red, green, blue or white. Specifically, the screen is filled with a solid block of colour whilst a reading is retrieved from the radiometer, before the output level is increased by one step, and another reading is taken. This process repeats until the entire native transfer curve has been captured. This generates a curve such as that shown in figure 1.

Because the colour wheel may not necessarily have equal sector sizes for the three primaries, the sequence might handle each primary slightly differently. Consequently the transfer curves might not be exactly the same. If so, three complete curves from 0 to 255 need to be captured - one each for red, green and blue.

Referring to the measured value for any given digital input level $n$, as $m_{rn}$, $m_{gn}$ or $m_{bn}$ for the red, green and blue channels respectively. In contexts where the output is referred to generalized across all channels, the term $m_n$ will be used.

The ideal line (i.e. the straight rising lines shown in Figures 2 and 3) is derived by drawing a straight line between the darkest point $m_0$ and the brightest point $m_{255}$. Target points on the ideal line are be referred to as $t(x)$, where

$$t(x) = m_0 + x(m_{255} - m_0)/255$$

Although $m_n$ is sampled only at integer values, $t(x)$ is a continuous function.

The point substitution LUT has the same number of entries as there are native levels, so for 8-bit native example used in this description there are 256 entries numbered from 0 to 255. In the equations which follow, the set of levels {0..255} will be referred to as $N$.

Each LUT entry $r_n$ may contain any value $n'$ which satisfies the inequation

$$\neg \exists n'' \in N, \; \left| m_{n''} - t(n) \right| < \left| m_{n'} - t(n) \right|$$

That is, a value n' is sought whose corresponding measurement $m_n$, is at least as close to the target value $t(n)$ as the measurement $m_n''$ of any other value $n''$ we could have chosen.

This can be achieved computationally by looking at all 255 possible values of n', and choosing the one with the smallest (or one of those with the smallest equal) absolute difference between $m_n$, and t(n).

The pre-dither substitution LUT has the same number of entries as there are dithered levels, so in the present example having 8-bits native plus 4-bits dither, there are 4080 (255 x 16) entries numbered from 0 to 4079. In the equations which follow, the set of levels {0..4079} are referred to as D. During the native transfer curve measuring process outlined above, the dithering operation was turned off, so there are not enough samples of $m_n$ to map to all of these entries, and a linear interpolation function p(d) is constructed.

Firstly, n is defined as $d/16$, rounded down with the 'floor' function

$$n = \left\lfloor d/16 \right\rfloor$$

Next, a weighting factor is determined based on the fractional part of $d/16$

$$w = d/16 - n$$

Finally, the weighted average of $m_n$ and $m_{n+1}$ is computed

$$p(d) = (1-w)m_n + wm_{n+1}$$

This function allows a prediction to be made as to the light intensity produced from a dithered mixture of levels n and $n$+1.

The computation process is similar to that for point substitution. Each LUT $a_d$ entry may contain any value d' which satisfies the inequation

$$\neg \exists d'' \in D, \; \left| p(d'' - t(d/16) \right| < \left| p(d') - t(d/16) \right|$$

As noted with the point substitution LUT computation, t is a continuous function, so in this case $d$/16 need not, and should not, be rounded down.

Referring to figure 4, the point substitution LUT is implemented as a step when the image is processed before the bitplanes are reordered and sent to the liquid crystal display. The red, green and blue channels each carry an eight bit signal, which has gamma correction applied. After various colour enhancement operations have been carried out, each signal is operated upon using the point substitution LUT as previously described.

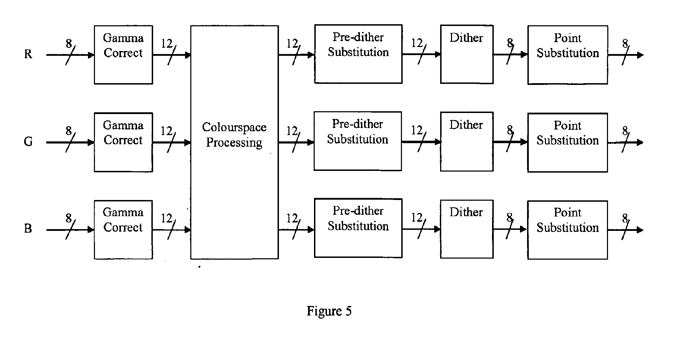

As previously noted, the point substitution provides an improvement on prior art systems and may be carried out alone. Referring to figure 5, where pre-dither substitution is additionally carried out, the point substitution LUT and pre-dither substitution LUT are implemented as steps when the image is processed before the bitplanes are reordered and sent to the liquid crystal display. The red, green and blue channels each carry an eight bit signal, which has gamma correction applied resulting in a 12 bit signal. After various colour enhancement operations have been carried out, the twelve bit signals are operated upon using the pre-dither substitution LUT, and dither is applied resulting in an eight bit signal for each channel. After dither is applied, each eight bit signal is operated upon using the point substitution LUT as previously described.

It will be realised that the type of input to output substitution disclosed here can be applied beneficially to any display systems where the input to output curve of the display departs from the ideal response. As well as for liquid crystal devices, it may be applied to, for example, micromirror displays. Although the signal described here comprises a three colour signal having eight bits (with a four bit dither) it will be realised that it can equally be applied to displays using monochrome or different colour systems and having a different number of bits-per-pixel.

**Claims**

1.  A method of adjusting a signal for a digital display where the input signal includes a number of discrete input intensity values which causes the display to give actual output signals having discrete output intensity values, where the relationship between the input signal to actual output signal departs from a desired input signal to output signal relationship, the method comprising the steps of

    i) considering at least a first input value and a first actual output value for the first input value,
    ii) finding a second input value and a second actual output value for the second input value where the second actual output value is closer to the desired value for the first input value,
    iii) recording a relationship between the first input value and the second input value, and
    iv) substituting the second input value for the first input value in the signal.

2.  A method according to claim 1, wherein the method is carried out for all input values.

3.  A method according to claim 2, wherein further output values may be created between adjacent substituted input values eg. by dithering, to create a discrete number of intermediate output values corresponding to input values intermediate between adjacent substituted input values, and further comprising the step of

    i) considering at least

        a) a third input value taken from the set of substituted second input values and the input values intermediate between adjacent substituted input values, and

b) a third actual output value for the third input value

ii) finding a fourth input value from this set and a corresponding fourth actual output value for the fourth input value where the fourth actual output value is closer to the desired value for the third input value,
iii) recording a relationship between the third input value and the fourth input value, and
iv) substituting the fourth input value for the third input value in the signal.

4. A method according to claim 3, wherein the method is carried out for all substituted input values.

5. A method according to any previous claim wherein the method is applied to a signal processor for a liquid crystal display.

**Figure 1**

Figure 2a

Figure 2b

Figure 2c

| Location (Input) | Value (Output) |
|------------------|----------------|
| 183 | *185* |
| 184 | *186* |
| 185 | *186* |
| 186 | *188* |
| 187 | 187 |
| 188 | *187* |
| 189 | 189 |
| 190 | 190 |

**Figure 2 (d)**

**Figure 3a**

**Figure 3b**

**Figure 3c**

Figure 4

Figure 5